# EUROPÄISCHE PATENTANMELDUNG

(11) **EP 1 544 024 A2**
(43) Veröffentlichungstag der Anmeldung: **22.06.2005**
(21) Anmeldenummer: 04106235.7
(22) Anmeldetag: 02.12.2004
(51) Int. Cl.: B60K 37/06

(54) **Schaltermodul**

(30) Priorität: 18.12.2003 DE 10361342
(71) Anmelder: Valeo Schalter und Sensoren GmbH, 74321 Bietigheim-Bissingen (DE)
(72) Erfinder: Staude, Sascha, 74321 Bietigheim-Bissingen (DE); Tornar, Roland, 86653 Mohnheim (DE); Werz, Martin, 74182 Obersulm (DE); Staiger, Alexander, 74078 Heilbronn (DE)
(74) Vertreter: Croonenbroek, Thomas

(57) **Zusammenfassung**

Die Erfindung betrifft ein Schaltermodul, insbesondere für eine Verwendung in Kraftfahrzeugen, mit mindestens einem Schalter und/oder Anzeigeelement, wobei der Schalter und/oder das Anzeigeelement mindestens eine optisch auslesbare, spezifische Kennung trägt und dass zur Identifizierung des Schalters und/oder des Anzeigeelements und/oder zur Erfassung des Schaltzustands des Schalters eine Leseeinheit vorgesehen ist, mit der die Kennung auslesbar ist.

Die Erfindung betrifft auch einen Schalter, ein Anzeigeelement, eine Leseeinheit sowie ein Trägerbauteil für eine Verwendung in einem Schaltermodul.

Die Erfindung betrifft ferner Verfahren zur Herstellung und zum Betrieb eines Schaltermoduls.

## Beschreibung

Die Erfindung betrifft ein Schaltermodul, insbesondere für eine Verwendung in Kraftfahrzeugen, mit mindestens einem Schalter und/oder einem Anzeigeelement.

Derartige Schaltermodule können in Kraftfahrzeuge, beispielsweise in einen Armaturenträger eingebaut werden, um einer Bedienperson die Steuerung verschiedener Funktionen zu ermöglichen. Dabei kann jedem Schalter eine bestimmte Funktion zugewiesen sein, wie beispielsweise Warnblinkanlage, Defroster, Heckrollo etc. Durch ein Anzeigeelement können bestimmte Betriebszustände des Kraftfahrzeugs visualisiert werden, bspw. der Belegungszustand eines Sitzes.

Im Kraftfahrzeugbau besteht eine erhöhter Bedarf nach einer Individualisierung eines Kraftfahrzeugs. So können verschiedene Optionen oder Ausstattungspakete geordert werden, um das Kraftfahrzeug an die Wünsche eines Kunden anpassen zu können. Dabei bedingt eine erhöhte Anzahl von zur Verfügung stehenden Ausstattungsoptionen eine unüberschaubare Kombinationsvielfalt verschiedener Ausstattungsoptionen. Für die Montage eines Kraftfahrzeugs ergeben sich daraus erhebliche Schwierigkeiten. So ist die Produktionslogistik sehr komplex, wenn eine Vielzahl von unterschiedlich gestalteten Schaltermodulen bereit gestellt werden müssen, um allen Ausstattungswünschen bzw. allen Kombinationen von Ausstattungswünschen Rechnung tragen zu können.

Es besteht die Möglichkeit, programmierbare Schaltermodule zu verwenden, wobei die Zuweisung der Funktion eines Schalters oder eines Anzeigeelements durch die Programmierung des Schaltermoduls erfolgt. Dies hat jedoch den Nachteil, dass die Programmierung zeitaufwendig und fehleranfällig ist und auch eine Wartung oder Reparatur nur mit Hilfe spezieller Programmiergeräte möglich ist.

Hiervon ausgehend liegt der Erfindung die Aufgabe zugrunde, ein Schaltermodul bereit zu stellen, dass ähnlich flexibel wie ein programmierbares Schaltermodul einsetzbar ist, jedoch eine erhöhte Zuverlässigkeit aufweist.

Dies Aufgabe wird erfindungsgemäß dadurch gelöst, dass der Schalter und/oder das Anzeigeelement mindestens eine optisch auslesbare, spezifische Kennung trägt und dass zur Identifizierung des Schalters und/oder des Anzeigeelements und/oder zur Erfassung des Schaltzustands des Schalters eine Leseeinheit vorgesehen ist, mit der die Kennung auslesbar ist.

Die spezifische Kennung eines Schalters und/oder eines Anzeigeelements kann durch eine zugeordnete Leseeinheit ausgelesen werden. Die Information, um welchen Schalter oder welches Anzeigeelement es sich handelt, geht nicht, wie im Stand der Technik üblich, aus einer extern abgelegten Zuordnungsvorschrift hervor, sondern ist direkt am oder im Schalter bzw. Anzeigeelement abgelegt. Dies ermöglicht eine besonders einfache und flexible Bestückung eines Schaltermoduls mit mehreren Schaltern und/oder Anzeigeelementen. Die Funktion eines Schalters oder Anzeigeelements muss nicht nachträglich durch eine Programmierung zugewiesen werden, sondern ist in der schalter- bzw. anzeigeelementspezifischen Kennung bereits abgelegt.

Vorteilhafterweise ist für die Leseeinheit ein Trägerbauteil vorgesehen, das bspw. als Leiterplatte ausgebildet sein kann. Auf dem Trägerbauteil kann pro Schalter oder Anzeigeelement jeweils eine Leseeinheit vorgesehen sein.

Der Schalter oder das Anzeigeelement kann direkt an dem Trägerbauteil montierbar sein oder an einer separaten Halterung. Somit kann entweder ein Schaltermodul mit Leiterplatte und Schalter und/oder Anzeigeelement der Montage eines Kraftfahrzeugs zugeführt werden, oder die genannten Bauteile können dem Kraftfahrzeug separat zugeführt werden. Als Halterung kommt beispielsweise ein Rahmen oder eine Blende in Betracht.

Die Kennung kann als Strichcode ausgebildet sein. Strichcodes sind auch unter der Bezeichnung "Barcode" bekannt und können ein Muster von parallel zueinander angeordneten Strichen aufweisen, die unterschiedlich breit sein können und/oder zueinander unterschiedlich beabstandet sind. Ein Strichcode ermöglicht es, eine spezifische, zuverlässig auslesbare Kennung zu erstellen. Im Gegensatz zu im Prinzip auch denkbaren Kennungen mit Buchstaben und/oder Zahlenkombinationen sind die Anforderungen zur Auswertung des ausgelesenen Codes geringer. Dies liegt daran, dass ein Strichcode im Gegensatz zu Buchstaben oder Zahlen bereits als binäre Information vorliegt.

Die Kennung weist vorteilhafterweise mindestens einen Abschnitt auf, der zur Identifizierung des Schalters und/oder des Anzeigeelements dient. Dieser Abschnitt der Kennung kann bei der Montage des Schalters und/oder des Anzeigeelements an der Leseeinheit vorbeigeführt werden, so dass die Leseeinheit den den Schalter und/oder das Anzeigeelement identifizierenden Abschnitt auslesen kann.

Die Kennung kann zusätzlich oder optional einen Abschnitt aufweisen, der zur Erfassung des Schaltzustands eines Schalters dient. Dieser Abschnitt der Kennung kann bei der Betätigung des Schalters an der Leseeinheit vorbeigeführt werden. Der Abschnitt kann für jeden Schaltzustand des Schalters Unterabschnitte aufweisen. So können beispielsweise zwei oder mehr Unterabschnitte vorgesehen sein.

Der Schalter kann beispielsweise als Drucktaster, Kippschalter, Wechsler, Drehschalter oder Drehregler ausgebildet sein. Diese können zwei oder mehrere definierte Schaltlagen haben. Die Schaltlagen können auch beliebig zwischen zwei Endlagen vorgesehen sein, bspw. bei der Verwendung eines Drehreglers für einen stufenlos einstellbaren Verbraucher. Ein solcher Verbraucher kann eine Sitzheizung sein.

Die Leseeinheit ist beispielsweise durch einen optoelektronischen Sensor gebildet. Dieser ist geeignet, die schalter- oder anzeigeelementspezifische Kennung bei der Montage und/oder Betätigung des Schalters und/oder Anzeigeelements auszulesen.

Der Schalter oder das Anzeigeelement kann eine Beschriftung und/oder Symbolik aufweisen. Diese Beschriftung oder Symbolik kann als Zusatzelement oder in einen Schalter oder ein Anzeigeelement bereits integriert vorgesehen sein. Entsprechend kann für den Schalter oder das Anzeigeelement eine Beleuchtung vorgesehen sein, die beispielsweise die Beschriftung und/oder Symbolik hinterleuchtet. Die Beleuchtung kann im Schalter oder Anzeigeelement selbst oder auf dem Trägerbauteil angeordnet sein.

Vorteilhafterweise kommuniziert die Leseeinheit über ein Bussystem mit einer Mastereinheit. Das Bussystem kann entsprechend dem LIN- oder dem CAN-Standard aufgebaut sein.

Für mehrere, bspw. für drei Leseeinheiten kann ein gemeinsamer Slave vorgesehen sein, der seinerseits mit einer Mastereinheit kommuniziert.

Die Erfindung betrifft auch einen Schalter, ein Anzeigeelement, eine Leseeinheit sowie ein Trägerbauteil für eine Verwendung in einem Schaltermodul.

Die Erfindung betrifft außerdem ein Verfahren zur Herstellung eines Schaltermoduls, bei dem eine Leseeinheit sowie ein Schalter oder ein Anzeigeelement mit einer optisch auslesbaren, spezifischen Kennung bereitgestellt werden, der Schalter oder das Anzeigeelement relativ zur Leseeinheit positioniert wird und der Schalter oder das Anzeigeelement mit Hilfe der Leseeinheit durch Auslesen der optischen Kennung identifiziert wird.

Die Erfindung betrifft außerdem ein Verfahren zum Betrieb eines Schaltermoduls, das sich dadurch kennzeichnet, dass der Schaltzustand eines Schalters erfasst wird, indem eine schalterspezifische, optisch auslesbare Kennung des Schalters von einer Leseeinheit ausgelesen wird.

Weitere vorteilhafte Ausgestaltungen und Einzelheiten der Erfindung sind der folgenden Beschreibung zu entnehmen, in der die Erfindung anhand des in der Zeichnung dargestellten Ausführungsbeispiels näher beschrieben und erläutert ist.

Es zeigen:
- Figur 1: eine schematische Darstellung eines Schaltermoduls mit drei Slaves mit jeweils drei Schaltern; und
- Figur 2: eine perspektivische Ansicht eines der Slaves gemäß Figur 1.

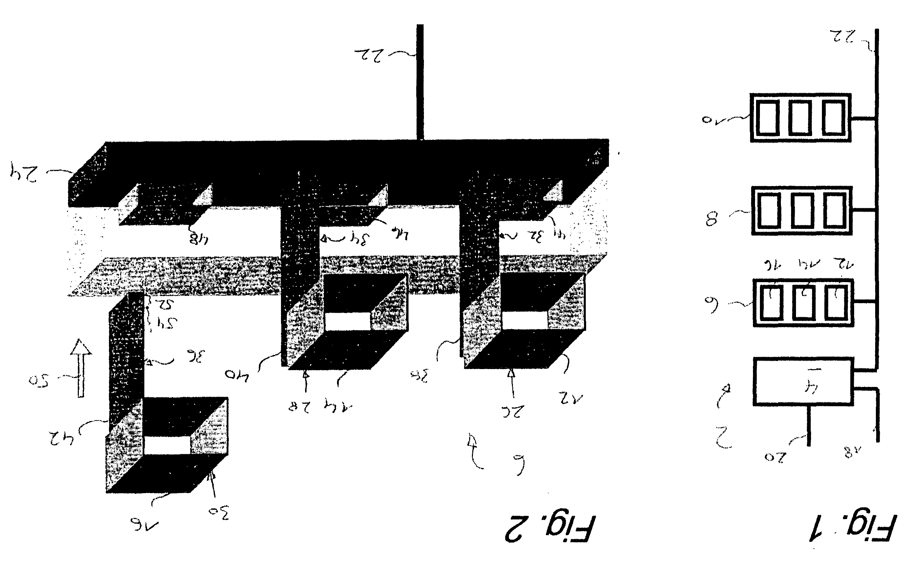

Das in Figur 1 dargestellte Schaltermodul ist insgesamt mit dem Bezugszeichen 2 bezeichnet. Es weist im Wesentlichen eine Mastereinheit 4 und drei Slaves 6, 8 und 10 auf, die jeweils mit drei Schaltern versehen sind, so bspw. der Slave 6 mit den Schaltern 12, 14 und 16.

Die Mastereinheit 4 steht mit einem symbolisch als Leitung 18 dargestellten CAN-Bus in Verbindung. Die Mastereinheit 2 verfügt außerdem über einen Starkstromausgang 20 für nachgeschaltete Verbraucher.

Die Mastereinheit 4 kommuniziert außerdem mit einem symbolisch durch eine Leitung 22 dargestellten LIN-Bus mit den Slaves 6, 8 und 10.

In Figur 2 ist der Slave 6 perspektivisch und schematisch dargestellt. Dieser weist ein Trägerbauteil 24 zur Anordnung der Schalter 12, 14 und 16 auf. Diese weisen jeweils eine einer Bedienperson zugewandte Fläche 26, 28 bzw. 30 für eine Beschriftung und/oder Symbolik auf.

Die Schalter 12, 14 und 16 weisen jeweils eine schalterspezifische, als Strichcode ausgebildete Kennung 32, 34 und 36 auf, die auf Kennungsträgern 38, 40 und 42 aufgebracht ist. Das Trägerbauteil 24 weist insgesamt drei als opto-elektronische Sensoren ausgebildet Leseeinheiten 44, 46 und 48 auf, die jeweils einer Kennung 32, 34 und 36 eines der Schalter 12, 14 und 16 zugeordnet sind.

Der Schalter 16 ist in Figur 2 in einem Vormontagezustand dargestellt. Wenn der Schalter 16 in mit 50 bezeichneter Fügerichtung auf das Trägerbauteil 24 gesetzt wird, wird ein unterer Abschnitt 52 der Kennung 36 an der Leseeinheit 48 vorbeigeführt. Diese kann den im Abschnitt 52 abgelegten Code auslesen und über den LIN-Bus 22 an die Mastereinheit 4 kommunizieren.

Die Schalter 12 und 14 sind in Figur 2 in ihrem Fertigmontagezustand dargestellt. Wenn der Schalter 16 entsprechend montiert ist, kann ein oberer Abschnitt 54 der Kennung 36 an der Leseeinheit 48 vorbeigeführt werden, wenn der Schalter 16 betätigt wird. Der dann von der Leseeinheit 48 ausgelesene Code kann ebenfalls über den LIN-Bus 22 an die Mastereinheit 4 kommuniziert werden.

## Patentansprüche

1. Schaltermodul (2), insbesondere für eine Verwendung in Kraftfahrzeugen, mit mindestens einem Schalter (12, 14, 16) und/oder Anzeigeelement, **dadurch gekennzeichnet, dass** der Schalter (12, 14, 16) und/oder das Anzeigeelement mindestens eine optisch auslesbare, spezifische Kennung (32, 34, 36) trägt und dass zur Identifizierung des Schalters (12, 14, 16) und/oder des Anzeigeelements und/oder zur Erfassung des Schaltzustands des Schalters (12, 14, 16) eine Leseeinheit (44, 46, 48) vorgesehen ist, mit der die Kennung (32, 34, 36) auslesbar ist.

2. Schaltermodul (2) nach Anspruch 1, **dadurch gekennzeichnet, dass** ein Trägerbauteil (24) für die Leseeinheit (44, 46, 48) vorgesehen ist.

3. Schaltermodul (2) nach Anspruch 2, **dadurch gekennzeichnet, dass** das Trägerbauteil (24) als Leiterplatte ausgebildet ist.

4. Schaltermodul (2) nach Anspruch 2 oder 3, **dadurch gekennzeichnet, dass** der Schalter (12, 14, 16) und/oder das Anzeigeelement an dem Trägerbauteil (24) montierbar ist bzw. sind.

5. Schaltermodul (2) nach mindestens einem der vorhergehenden Ansprüche, **dadurch gekennzeichnet, dass** eine Halterung vorgesehen ist, in oder an der der Schalter (12, 14, 16) und/oder das Anzeigeelement montierbar ist bzw. sind.

6. Schaltermodul (2) nach mindestens einem der vorhergehenden Ansprüche, **dadurch gekennzeichnet, dass** die Kennung (32, 34, 36) als Strichcode ausgebildet ist.

7. Schaltermodul (2) nach mindestens einem der vorhergehenden Ansprüche, **dadurch gekennzeichnet, dass** die Kennung (32, 34, 36) mindestens einen Abschnitt (52) aufweist, der zur Identifizierung des Schalters (12, 14, 16) und/oder des Anzeigeelements dient.

8. Schaltermodul (2) nach mindestens einem der vorhergehenden Ansprüche, **dadurch gekennzeichnet, dass** die Kennung (32, 34, 36) mindestens einen Abschnitt (54) aufweist, der zur Erfassung des Schaltzustands des Schalters (12, 14, 16) dient.

9. Schaltermodul (2) nach mindestens einem der vorhergehenden Ansprüche, **dadurch gekennzeichnet, dass** der Schalter (12, 14, 16) als Drucktaster, Kippschalter, Wechsler, Drehschalter oder Drehregler ausgebildet ist.

10. Schaltermodul (2) nach mindestens einem der vorhergehenden Ansprüche, **dadurch gekennzeichnet, dass** die Leseeinheit (44, 46, 48) als opto-elektronischer Sensor ausgebildet ist.

11. Schaltermodul (2) nach mindestens einem der vorhergehenden Ansprüche, **dadurch gekennzeichnet, dass** der Schalter (12, 14, 16) oder das Anzeigeelement eine Beschriftung und/oder Symbolik aufweist.

12. Schaltermodul (2) nach mindestens einem der vorhergehenden Ansprüche, **dadurch gekennzeichnet, dass** eine Beleuchtung für den Schalter (12, 14, 16) und/oder das Anzeigeelement vorgesehen ist.

13. Schaltermodul (2) nach Anspruch 12, **dadurch gekennzeichnet, dass** die Beleuchtung auf dem Trägerbauteil (24) angeordnet ist.

14. Schaltermodul (2) nach Anspruch 12 oder 13, **dadurch gekennzeichnet, dass** die Beleuchtung im Schalter (12, 14, 16) oder Anzeigeelement angeordnet ist.

15. Schaltermodul (2) nach mindestens einem der vorhergehenden Ansprüche, **dadurch gekennzeichnet, dass** die Leseeinheit (44, 46, 48) über ein Bussystem (22) mit einer Mastereinheit (4) kommuniziert.

16. Schaltermodul (2) nach Anspruch 15, dass für mehrere Leseeinheiten (44, 46, 48) ein Slave (6, 8, 10) vorgesehen ist.

17. Schalter (12, 14, 16) für eine Verwendung für ein Schaltermodul (2) nach einem der vorhergehenden Ansprüche, mit mindestens einer optisch auslesbaren, spezifischen Kennung (32, 34, 36), die durch eine Leseeinheit (44, 46, 48) eines Schaltermoduls (2) zur Identifizierung des Schalters (12, 14, 16) und/oder zur Erfassung des Schaltzustands des Schalters (12, 14, 16) auslesbar ist.

18. Anzeigeelement für eine Verwendung für ein Schaltermodul (2) nach einem der Ansprüche 1 bis 16, mit mindestens einer optisch auslesbaren, spezifischen Kennung (32, 34, 36), die durch eine Leseeinheit (44, 46, 48) eines Schaltermoduls (2) zur Identifizierung des Anzeigeelements auslesbar ist.

19. Leseeinheit (44, 46, 48) für eine Verwendung für ein Schaltermodul (2) nach einem der Ansprüche 1 bis 16, **dadurch gekennzeichnet, dass** sie dafür vorgesehen ist, eine optisch auslesbare, spezifische Kennung (32, 34, 36) eines Schalters (12, 14, 16) und/oder Anzeigeelements eines Schaltermoduls (2) zur Identifizierung des Schalters (12, 14, 16) und/oder des Anzeigeelements und/oder zur Erfassung des Schaltzustands des Schalters (12, 14, 16) auszulesen.

20. Trägerbauteil (24) zur Aufnahme eines Schalters (12, 14, 16) nach Anspruch 17 und/oder zur Aufnahme eines Anzeigeelements nach Anspruch 18 und/oder einer Leseeinheit (44, 46, 48) nach Anspruch 19.

21. Verfahren zur Herstellung eines Schaltermoduls (2), insbesondere eines Schaltermoduls (2) nach mindestens einem der Ansprüche 1 bis 16, **gekennzeichnet durch** die folgenden Verfahrensschritte:
- es wird eine Leseeinheit (44, 46, 48) bereitgestellt,
- es wird ein Schalter (12, 14, 16) oder ein Anzeigeelement mit einer optisch auslesbaren, spezifischen Kennung (32, 34, 36) bereitgestellt,
- der Schalter (12, 14, 16) oder das Anzeigeelement wird relativ zur Leseeinheit (44, 46, 48) positioniert,
- der Schalter (12, 14, 16) oder das Anzeigeelement wird mit Hilfe der Leseeinheit (44, 46, 48) **durch** Auslesen der optischen Kennung (32, 34, 36) identifiziert.

22. Verfahren zum Betrieb eines Schaltermoduls (2), insbesondere eines Schaltermoduls (2) nach mindestens einem der Ansprüche 1 bis 16, **dadurch gekennzeichnet, dass** der Schaltzustand eines Schalters (12, 14, 16) erfasst wird, indem eine schalterspezifische, optisch auslesbare Kennung (32, 34, 36) des Schalters (12, 14, 16) von einer Leseeinheit (44, 46, 48) ausgelesen wird.
